# EUROPEAN PATENT SPECIFICATION

(11) **EP 2 191 642 B1**
(45) Date of publication and mention of the grant of the patent: **09.11.2016**
(21) Application number: 08831588.2
(22) Date of filing: 18.09.2008
(51) Int. Cl.: H04N 5/45, H04N 5/44

(54) **APPARATUS AND METHOD OF SIMULTANEOUSLY PLAYING MULTIPLE CHANNEL IMAGES**
VORRICHTUNG UND VERFAHREN ZUM SIMULTANEN ABSPIELEN MEHRERER KANALBILDER
APPAREIL ET PROCEDE DE LECTURE SIMULTANEE D'IMAGES DE CANAUX MULTIPLES

(30) Priority: 20.09.2007 US 973904 P; 23.10.2007 KR 20070106845
(43) Date of publication of application: 02.06.2010
(73) Proprietor: Samsung Electronics Co., Ltd., Suwon-si, Gyeonggi-do, 443-742 (KR)
(72) Inventor: SEONG, Yeong-Kyeong, Suwon-si Gyeonggi-do 443-470 (KR); CHOI, Yoon-Hee, Suwon-si Gyeonggi-do 443-370 (KR); JANG, Oh-Young, Suwon-si Gyeonggi-do 443-470 (KR); IM, Dong-Woo, Yongin-si Gyeonggi-do 448-162 (KR)
(74) Representative: Grootscholten, Johannes A.M.
(86) International application number: PCT/KR2008/005528
(87) International publication number: WO 2009/038370

(56) References cited:
- WO-A2-2006/044547
- KR-A- 20060 072 156
- US-A- 5 161 019
- US-A- 6 147 717
- US-A1- 2004 003 399
- US-A1- 2004 111 744
- US-A1- 2004 194 134
- US-B2- 6 704 372

## Description

### Technical Field

The present invention relates to an apparatus and method of simultaneously playing multiple channel images, and more particularly to an apparatus and method of simultaneously playing moving images of multiple channels through a limited number of tuners, and displaying the images on a display screen in a mosaic form.

### Background Art

According to current digital TV technology, it takes about 1-2 seconds to change a channel after a user inputs a key for requesting the channel change using a remote controller. In the case of an IPTV (Internet Protocol Television), a time delay of about 3-5 seconds occurs. Particularly, if a user intends to search for a desired channel image to be viewed by changing multiple channels one by one, such a time delay accumulates and causes the user inconvenience.

Recently, with the increase of multimedia content such as digital broadcasts, User Created Content (UCC), and so forth, a technique has been introduced that provides a mosaic Electronic Program Guide (EPG) or Picture In Picture (PIP) image so that a user can conveniently select a desired one of multiple content included therein. Since such a mosaic type image shows multiple images, a user can easily select a desired image among the multiple images.

According to this conventional technique, a transmitting end generates and transmits a mosaic type image, and a receiving end receives and decodes the corresponding mosaic channel to show the mosaic type image. However, this technique has the problem that a transmitter should generate and transmit the mosaic type image. Particularly, in the case where respective channel images are allocated and transmitted by different service providers, it is difficult to make the different channel images into a multi-channel image. Further, according to this technique, it is impossible for a user to generate a mosaic channel image that is composed of channel images desired by the user.

As another conventional technique, a method of receiving and playing respective channel images using as many tuners as the number of channel images, which constitute a mosaic image, has been used. According to this method, however, the price of a receiver is high due to the use of multiple tuners.

Further, according to this technique, it is impossible for a user to generate a mosaic channel image that is composed of channel images desired by the user.

As another conventional technique, a method of receiving and playing respective channel images using as many tuners as the number of channel images, which constitute a mosaic image, has been used. According to this method, however, the price of a receiver is high due to the use of multiple tuners.

In US 5,161,019 a "channel guide" system is provided, comprising a picture-in-picture processing unit for displaying an array of images corresponding to respective channels or auxiliary televisions signals on a display screen, which is automatically activated when the video signal currently being processed by the receiver no longer contains program information.

In US 2004/0003399 a method is provided for efficient channel surfing in a compressed frame television system by receiving and storing compressed frames representing unwatched channels. When a viewer selects one of the unwatched channels for viewing, the corresponding compressed frame is retrieved from the memory and is displayed until a sufficient number of frames received for that channel to provide for normal viewing of that channel.

In US 2004/0194134 a method is disclosed for changing channels in a digital television transport stream, which comprises accessing the digital television transport stream, itself comprising a plurality of multiplexed channels, by using a first tuner displaying a first program channel from the digital television transport stream, detecting and storing in a buffer memory recent video data from a second channel while displaying the first channel by using a second tuner, immediately recalling and presenting a complete video frame from the stored video data of the second channel for display when the second channel is selected by the user, and displaying real-time video from the second channel when decodable real-time video data is available from the transport stream.

### Disclosure of Invention

### Technical Problem

Accordingly, the present invention has been made to address the above-mentioned problems occurring in the prior art, and an aspect of the present invention is to provide an apparatus and method of simultaneously playing multiple channel images in a mosaic form on a display screen by successively receiving and playing the multiple channel images using a limited number of tuners.

Additional aspects and features of the invention will be set forth in part in the description which follows and in part will become apparent to those having ordinary skill in the art upon examination of the following or may be learned from practice of the invention.

### Technical Solution

According to an aspect of the invention, there is provided an apparatus for simultaneously playing multiple channel images, which includes a frequency changeover tuner successively selecting multiple channels as changing frequencies; a demodulation unit demodulating data of the selected channels; a storage unit storing the demodulated data; a playback unit playing the stored data by channels; and an image-management unit managing an arrangement of displayed channel images.

In another aspect of the present invention, there is provided a method of simultaneously playing multiple channel images, which includes (a) selecting a specified channel among multiple channels using a frequency changeover tuner successively selecting the multiple channels as changing frequencies; (b) receiving and storing data of the selected channel; and (c) playing the stored data; wherein after completion of the storage, the frequency changeover tuner selects a channel following the specified channel, repeats the performance of steps (b) and (c), and plays the multiple channel images on a display screen. The aspects of the invention are expressed in the appended claims.

### Brief Description of the Drawings

The above and other aspects and features of the present invention will be apparent from the following detailed description taken in conjunction with the accompanying drawings, in which:
FIG. 1 is a block diagram illustrating the construction of an apparatus for simultaneously playing multiple channel images according to an exemplary embodiment of the present invention;
FIG. 2 is a view explaining the operation of the apparatus for simultaneously playing multiple channel images according to an exemplary embodiment of the present invention;
FIG. 3 is a view explaining the principle of a simultaneous playback of two channel images using one tuner in an apparatus for simultaneously playing multiple channel images according to an exemplary embodiment of the present invention;
FIG. 4 is a view explaining methods of playing stored data whenever a frequency changeover tuner repeats selection of channel A among multiple channels;
FIG. 5 is a view explaining the principle of a simultaneous playback of multiple channel images including a real-time playback channel using two tuners in an apparatus for simultaneously playing the multiple channel images according to an exemplary embodiment of the present invention;
FIG. 6 is a view explaining the operating principle of the apparatus for simultaneously playing multiple channel images when the apparatus changes the real-time playback channel according to an exemplary embodiment of the present invention;
FIG. 7 is a view showing multiple PIP images according to an exemplary embodiment of the present invention; and
FIG. 8 is a flowchart illustrating a method of simultaneously playing multiple channel images according to an exemplary embodiment of the present invention.

### Mode for the Invention

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims.

The present invention will be described herein with reference to the accompanying drawings illustrating block diagrams and flowcharts for explaining an apparatus and method of simultaneously playing multiple channel images according to embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded into a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which comprises one or more executable instructions for implementing the specified logical function(s). It should also be noted that in some alternative implementations, the functions noted in the blocks may occur out of the order shown. For example, two blocks shown in succession may in fact be executed substantially concurrently or the blocks may sometimes be executed in the reverse order, depending upon the functionality involved.

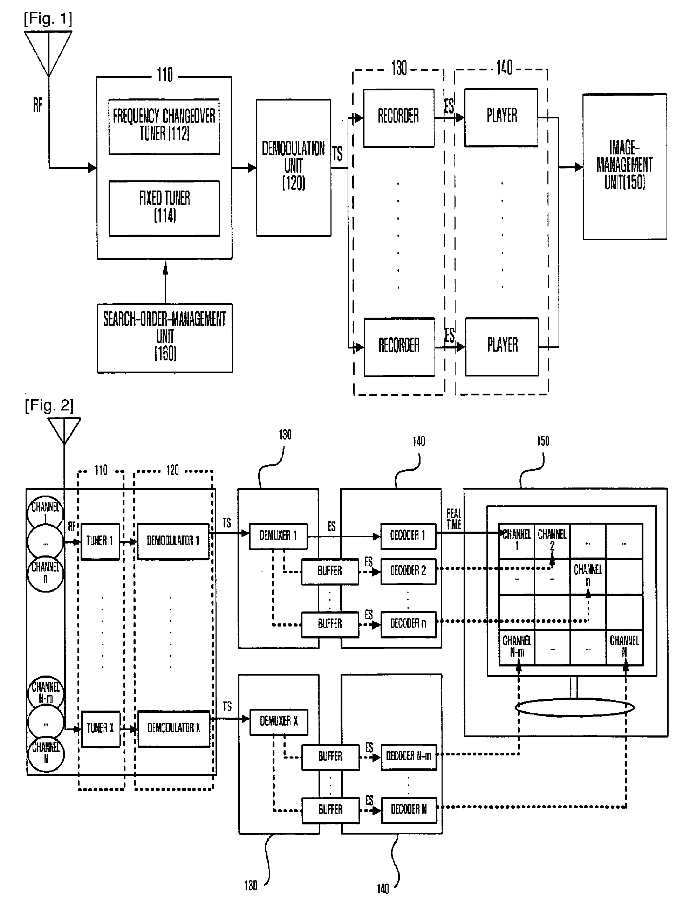

FIG. 1 is a block diagram illustrating the construction of an apparatus for simultaneously playing multiple channel images according to an embodiment of the present invention.

The apparatus for simultaneously playing multiple channel images according to an embodiment of the present invention includes a tuner 110, a demodulation unit 120, a storage unit 130, a playback unit 140, and an image-management unit 150.

In the exemplary embodiments of the present invention, the term "unit", as used herein, may be implemented as a kind of module. Here, the term "module" means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, fumware, microcode, circuitry, data, databases, data structures, tables, arrays, and variables. The functionality provided for in the components and modules may be combined into fewer components and modules or further separated into additional components and modules.

The tuner 110 receives desired broadcasting channel data by selecting and extracting a specified frequency band from RF (Radio Frequency) signals transmitted from a transmitting end. In the embodiments of the present invention, the tuner 110 may be divided into a frequency changeover tuner 112 and a fixed tuner 114. The frequency changeover tuner 112 extracts a frequency signal by successively selecting multiple channels. By contrast, the fixed tuner 114 extracts a frequency signal by selecting only one channel using a fixed frequency. In the exemplary embodiments of the present invention, the tuner 110 is divided into the frequency changeover tuner 112 and the fixed tuner 114 in accordance with a difference in function between them rather than a physical difference between them. That is, the frequency changeover tuner 112 and the fixed tuner 114 do not have their own fixed functions, but the frequency changeover tuner 112 that extracts the frequency signal through the successive selection of the multiple channels may be changed to the fixed tuner 114 that selects only one channel, and vice versa. Also, in the embodiments of the present invention, more than one frequency changeover tuner 112 and fixed tuner 114 may be constructed in the apparatus.

The demodulation unit 120 demodulates digital broadcasting data of the channel selected by the tuner 110.

The storage unit 130 stores the data demodulated by the demodulation unit 120. The data may be stored in different storage locations by channels in a recorder, or may be successively received and stored in respective storage devices of recorders by channels. Referring to FIG. 1, recorders are formed by channels, and respective channel data being successively received are stored in the respective recorders.

The playback unit 140 plays the stored data by channels.

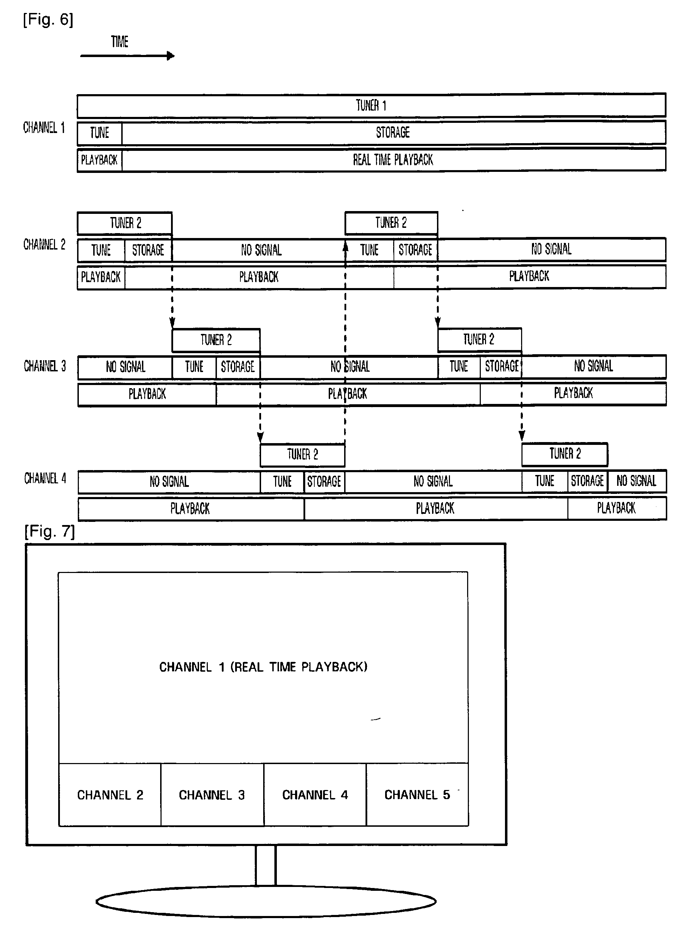

The image-management unit 150 manages the arrangement of channel images being played on a screen. That is, the image-management unit 150 determines whether to play multiple channel images in a single form, in a multi-PIP form, or in a mosaic form on a screen. The signal form refers to the display of one channel image on the screen. The multi-PIP form refers to the display of multiple PIP images on the screen in a manner that one channel image is displayed in real time on a main channel portion of the screen and the remaining channel images are displayed on small sub-channel portions of the screen, respectively, as shown in FIG. 7. The mosaic form refers to the display of the multiple channel images in the form of checkers on the screen, as shown in FIG. 2.

The apparatus for simultaneously playing multiple channel images according to the exemplary embodiments of the present invention may further include a search-order-management unit 160, which determines the order of channels to be selected by the frequency changeover tuner 112 as the frequency changeover tuner 112 successively changes the frequencies. The order of channels may be the order pre-inputted by a user or the order set through the analysis of user's preference to the respective channels.

Hereinafter, the apparatus for simultaneously playing multiple channel images according to an embodiment of the present invention will be described in more detail with reference to FIG. 2.

FIG. 2 is a view explaining the operation of the apparatus for simultaneously playing multiple channel images according to an embodiment of the present invention.

Referring to FIG. 2, X tuners 110 are provided to successively receive channel groups each of which is composed of multiple channels. That is, tuner 1 successively selects n broadcasting frequencies of channel 1 to n, and the last tuner X successively selects m broadcasting frequencies of channel N-m to channel N. The X tuners group n channels in total and successively selects the corresponding broadcasting frequencies.

Here, the successive selection of broadcasting frequencies means, for example, in the case of tuner 1, a time divided selection of channel 1 to channel n. That is, it means a repeated selection of channel 1 to channel n by changing the frequencies at predetermined periods.

Demodulators that constitute the demodulation unit 120 demodulate signals having passed through the tuners 110 and extract Transport Streams (TSs). That is, the demodulators extract channel coded symbols and change the extracted symbols to digital signals. The demodulators may be provided corresponding to the respective tuners 110.

Demuxers separate data such as audio, video, and additional information, which are mixed in the unit of a packet in the TSs transferred from the demodulators, and store the separated data in buffers that constitute the storage unit 130.

Decoders that constitute respective players in the playback unit 140 decode Element Streams (ESs) which are the separated data. The decoders may include video decoders and audio decoders which decode video data and audio data, respectively.

The image-management unit 150 determines whether to display the multiple channel images in a single form, in a multi-PIP form, or in a mosaic form, on the screen. In FIG. 2, the multiple channel images are displayed in a mosaic form.

In FIG. 2, connection parts of the demuxers are indicated by solid lines and dotted lines. The connection parts indicated by solid line represent real time playback. In the case where tuner 1 plays channel 1 in real time, the tuner fixedly selects channel 1, and thus cannot play the remaining channels, i.e., channel 2 to channel n. In the same manner, in the case of successively selecting multiple channels as indicated by dotted lines and simultaneously playing the stored data (hereinafter referred to as "buffer playback"), the tuner cannot perform the real time playback as indicated by solid lines, but can perform the buffer playback only.

As described above, the tuner 110 may be a frequency changeover tuner 112 or a fixed tuner 114, which may be changeable. In the case of a fixed tuner 114, the real time playback is performed, while in the case of a frequency changeover tuner 112, the buffer playback is performed. It is impossible for one tuner 110 to perform both the real time playback and the buffer playback. Accordingly, one tuner 110 performs the real time playback of the channel being currently viewed, and other remaining tuners store other channels in a time divided manner to perform the buffer playback thereof, with the result that the multiple channels can be simultaneously played.

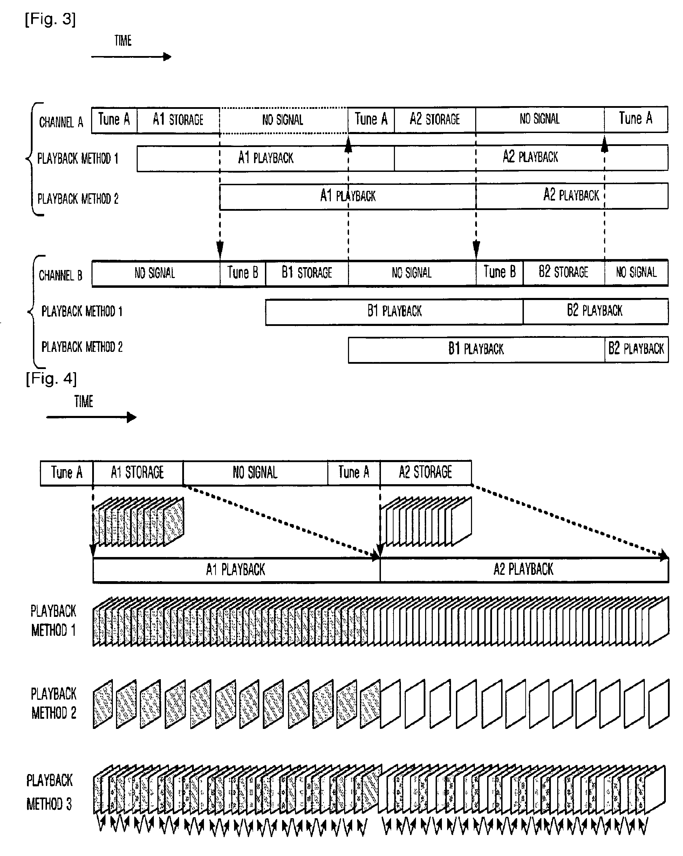

FIG. 3 is a view explaining the principle of the simultaneous playback of two channel images using one tuner in an apparatus for simultaneously playing multiple channel images according to an embodiment of the present invention.

Here, the term "tuning" corresponds to a time for which a specified channel is selected through the frequency change performed by the tuner 110 in a channel changeover process, and then an immediately playable stream is obtained by the decoder after the demodulation and demuxing of the selected channel.

First, the tuner 110 tunes channel A for a specified time and stores data A1 of the channel A in a buffer. Simultaneously with the completion of the storage of the data A1, the tuner 110 tunes channel B that follows the Channel A for the specified time, and stores data B 1 of the channel B in a buffer. During the tuning and storing of the channel B, the tuner 110 cannot receive any input of the channel A. In the same manner, simultaneously with the completion of the storage of the channel B, the tuner 110 tunes again the channel A and stores data A2. As described above, the tuner 110 can successively tune the channel A and the channel B and store the corresponding data in the buffers.

In the drawings, it is exemplified that one tuner 110 successively selects and stores two channels, i.e., channel A and channel B. However, it is also possible to successively select and store more channels.

Two playback methods may be considered: playback method 1 that plays data simultaneously with the storage of the data in a buffer after completion of the tuning, and playback method 2 that plays data after completion of the storage of the tuned data.

As described above, according to the present invention, moving images of the multiple channels can be simultaneously buffered and played using one tuner 110.

FIG. 4 is a view explaining methods of playing stored data whenever a frequency changeover tuner repeats selection of channel A among multiple channels.

Whenever the tuner 110 repeats the selection of one channel, the stored stream should be played until the next stored stream is used. For this, playback methods are shown in FIG. 4. Although FIG. 4 illustrates in detail the playback method 1 of FIG. 3, the playback method 2 can be performed in the same manner.

First, according to the playback method 1 of FIG. 4, the stored stream A1 can be repeatedly played at a normal speed. If stream A2 is stored through the next selection, the repeated playback of the stream A 1 is stopped, and the stream A2 is repeatedly performed. Alternatively, A2 may be played once at a normal speed, and then a still image may be displayed.

In the playback method 2 of FIG. 4, a single playback is performed through the adjustment of the playback speed of the stored stream. That is, in the case where the amount of stored data is not enough to be played at a normal speed in a specified section, the playback speed is adjusted so that the data is played slowly.

In the playback method 3 of FIG. 4, in order to make up for the cutoff phenomenon of the image during the slow playback of the image, the number of frames to be played is increased by interpolating a frame between respective frames of the stored stream, and the interpolated frames are played. A method of generating interpolated frames is well known in the art, and thus the detailed description thereof will be omitted.

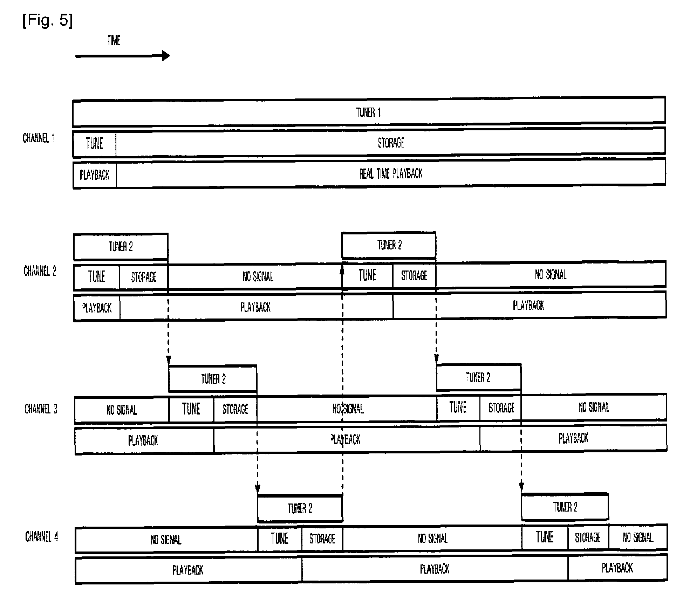

FIG. 5 is a view explaining the principle of a simultaneous playback of multiple channel images including a real-time playback channel using two tuners in an apparatus for simultaneously playing the multiple channel images according to an embodiment of the present invention.

In FIG. 5, one real-time playback and buffer playback of the multiple channels are performed using two tuners 110. Tuner 1, which is fixed tuner 114, selects channel 1, and corresponding data is played in real time and is simultaneously stored in the buffer. Tuner 2, which is a frequency changeover tuner 112, successively selects channel 2, channel 3, and channel 4, and the buffer playback of data of the channel 2, channel 3, and channel 4 is performed. The successive channel selection performed by the tuner 2 and the buffer playback of data are the same as those described with reference to FIG. 3.

However, FIG. 3 illustrates that one tuner 110 successively selects two channels and the buffer playback of the two channel data is performed, whereas FIG. 5 illustrates that tuner 2 successively selects three channels and buffer playback of the three channel data is performed. As described above, one tuner 110 performs the real time playback of one channel as a fixed tuner 114, and the remaining tuner successively selects the multiple channels to perform the buffer playback thereof as a frequency changeover tuner 114, with the result that the multiple channels can be simultaneously played.

FIG. 6 is a view explaining the operating principle of the apparatus for simultaneously playing multiple channel images when the apparatus changes the real-time playback channel according to an embodiment of the present invention.

FIG. 6 shows the method for changing the real-time playback channel to another channel while, as shown in FIG. 5, tuner 1 that is the fixed tuner 114 selects channel 1 to perform the real-time playback of the channel 1, and tuner 2 successively selects channel 2, channel 3, and channel 4 to perform the buffer playback of the channel 2, channel 3, and channel 4.

If the real-time playback channel is changed to channel 2 during the real-time playback of the channel 1, tuner 2 selects channel 3 to store the corresponding data. At this time, tuner 2 is selecting another channel that is not the channel to be changed. In this case, the tuner 1, which selected the channel 1, selects the changed channel 1 simultaneously with the changeover of the channel, and channel 2 is played in real time. Meanwhile, the tuner 2, which successively selected the channel 2, channel 3, and channel 4, successively selects channel 1, channel 3, and channel 4, and the buffer playback of the channel 1, channel 3, and channel 4 is performed. In the drawing, the moment the changeover from channel 1 to channel 2 is performed, the tuner 2 selects channel 3, and thereafter, successively selects channel 4 and channel 1.

In contrast, if the real-time playback channel is changed from channel 2 to channel 4 while channel 2 is played in real time, and the buffer playback of channel 1, channel 3, and channel 4 is performed, tuner 2, which is frequency changeover tuner 112, selects channel 4 that is the channel to be changed. In this case, tuner 2 is changed to the fixed tuner 114 that selects only channel 2 to perform the real-time playback of channel 2, and tuner 1, which was the fixed tuner 114, is changed to the frequency changeover tuner 112 that successively selects channel 1, channel 2, and channel 3 to perform the buffer playback of the remaining channels except for channel 4. That is, as the frequency changeover tuner 112 selects or stores the channel to be changed during the changeover of the real-time playback channel, the fixed tuner 114 is changed to the frequency changeover tuner 112, and the frequency changeover tuner 112 is changed to the fixed tuner 114.

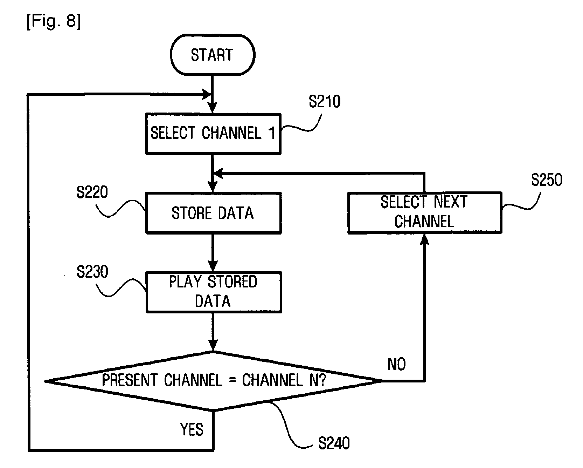

Hereinafter, a method of simultaneously playing multiple channel images according to an embodiment of the present invention will be described with reference to FIG. 8.

FIG. 8 is a flowchart illustrating a method of simultaneously playing multiple channel images according to an embodiment of the present invention.

In FIG. 8, a method of simultaneously playing multiple channel images using one frequency changeover tuner 112 is shown.

First, the frequency changeover tuner 112 selects channel 1 according to the priority determined through the search-order-management unit 160 S210. The tuner receives and stores data of the selected channel 1 S220, and plays the stored data S230. Simultaneously with the completion of the data storage, the tuner 110 selects the next channel S250, and then repeats the data storage S220 and the data playback S230. If the last channel is received S240 during the repetition of successive reception of the channels, the tuner selects again the channel 1 S210, and repeats the selection of channel 2, ..., channel n to play the received data. At this time, the image-management unit 150 displays the multiple channels in a multi-PIP form or in a mosaic form on one screen.

Whenever the frequency changeover tuner 112 repeats selection of a specified channel among multiple channels, the stored data can be repeatedly played. In this case, a single playback may be performed with the playback speed adjusted, or a slow single playback of the data is performed through data frame interpolation, with the cutoff phenomenon of the image eliminated.

In addition, in the case of successively storing data of the respective channels, the data can be played with the simultaneous storage thereof or after completion of the data storage.

In addition, by receiving and playing in real time a specified frequency channel through the fixed tuner 114, the played image can be displayed on a screen simultaneously with the buffer playback as described above.

If the real-time playback channel selected by the fixed tuner 114 is changed to one of the multiple channels selected by the frequency changeover tuner 112 while the frequency changeover tuner 112 is selecting another channel that is not the changed channel, the fixed tuner 114 selects the changed channel, and the frequency changeover tuner 112 successively selects the remaining channels except for the changed channel to play the selected channels.

In addition, if the real-time playback channel selected by the fixed tuner 114 is changed to one of the multiple channels selected by the frequency changeover tuner 112 while the frequency changeover tuner 112 is selecting the changed channel, the fixed tuner 114 becomes the frequency changeover tuner 112 that successively selects the remaining channels except for the changed channel, and the frequency changeover tuner 112 becomes the fixed channel 114 that receives only the changed channel. This feature has been described with reference to FIG. 6.

### Industrial Applicability

As described above, the apparatus and method of simultaneously playing multiple channel images according to the present invention produces one or more of the following effects.

First, multiple channel images can be simultaneously played on a screen using a limited number of tuners.

Second, by simultaneously showing the channel images in a mosaic form, the time delay accumulated while the multiple channels are successively changed can be prevented from occurring.

Third, even though a transmitting end does not transmit images in a mosaic form, the images can be played in the mosaic form on a screen.

Fourth, by showing multiple channel images in a mosaic form on a screen, the multiple channels can be simultaneously searched for.

## Claims

1. An apparatus for simultaneously playing moving channel images of multiple channels, the apparatus comprising:
a frequency changeover tuner (112) which is configured to successively select multiple channels as changing frequencies;
a demodulation unit (120) which is configured to demodulate data of the selected channels;
a storage unit (130) which is configured to store the demodulated data;
a playback unit (140) which is configured to play the stored data by channels;
an image-management unit (150) which is configured to manage an arrangement of displayed channel images, wherein the apparatus comprises:
a fixed channel tuner (114) which is configured to receive a specified frequency real-time playback channel and to play in real time the specified frequency realtime playback channel;
wherein the playback unit is configured to simultaneously play moving channel images of the multiple channels, and the frequency changeover tuner is changeable to the fixed channel tuner and the fixed channel tuner is changeable to the frequency changeover tuner,
and wherein:
if the real-time playback channel selected by the fixed channel tuner (114) is changed to one of the multiple channels selected by the frequency changeover tuner (112) while the frequency changeover tuner (112) is selecting another channel that is not the changed channel for a real-time playback, the fixed channel tuner (114) selects the changed channel for a real-time playback, and the frequency changeover tuner (112) successively selects the remaining channels except for said changed channel, and wherein
if a real-time playback channel selected by the fixed channel tuner (114) is changed to the channel selected by the frequency changeover tuner for a real-time playback, the fixed channel tuner (114) becomes the frequency changeover tuner (112) that successively selects the remaining channels except for the changed channel for a real-time playback, and the frequency changeover tuner that selects said changed channel becomes the fixed tuner (114).

2. Apparatus as claimed in claim 1, wherein the frequency changeover tuners (112) is provided in a plural number, and each of the frequency changeover tuners successively receives channel groups each of which is composed of multiple channels.

3. The apparatus of claim 1, wherein the playback unit (140) repeats playback of the stored data whenever the frequency changeover tuner repeats selection of a specified channel among the multiple channels.

4. The apparatus of claim 1, wherein the playback unit (140) performs a single playback of the stored data through adjustment of a playback speed of the stored data whenever the frequency changeover tuner repeats selection of a specified channel among the multiple channels.

5. The apparatus of claim 1, wherein the playback unit (140) performs a single playback of the stored data through frame interpolation of the stored data whenever the frequency changeover tuner repeats selection of a specified channel among the multiple channels.

6. A method of simultaneously playing moving channel images of multiple channels, comprising:
(a) selecting a specified channel among multiple channels using a frequency changeover tuner successively selecting the multiple channels as changing frequencies (S210);
(b) receiving and storing data of the selected channel (S220); and
(c) playing the stored data (S230);
wherein after completion of the storing, the frequency changeover tuner selects a channel following the specified channel, repeats (b) and (c), and plays the multiple channel images on a display screen, wherein the method further comprises;
- playing in real time one of the multiple channels being played on the screen using a fixed tuner receiving a specified frequency channel, while simultaneously playing moving channel images of the multiple channels,
- changing the frequency changeover tuner to the fixed channel tuner and the fixed channel tuner to the frequency changeover tuner, the changing comprising:
- if a real-time playback channel selected by the fixed tuner is changed to one of the multiple channels selected by the frequency changeover tuner while the frequency changeover tuner is selecting another channel that is not the changed channel for a real-time playback, the fixed tuner selects the changed channel for a real-time playback, and the frequency changeover tuner successively selects the remaining channels exempting for said changed channel; and
if a real-time playback channel selected by the fixed tuner is changed to the channel selected by the frequency changeover tuner for a real-time playback, the fixed tuner becomes the frequency changeover tuner that successively selects the remaining channels exempting the changed channel for a real-time playback, and the frequency changeover tuner that selects said changed channel becomes the fixed channel tuner.

7. Method as claimed in claim 6, wherein a plurality of frequency changeover tuners is provided, and each of the frequency changeover tuners successively receives channel groups each of which is composed of multiple channels.

8. The method of claim 6, wherein (c) comprises repeating playback of the stored data whenever the frequency changeover tuner repeats selection of a specified channel among the multiple channels.

9. The method of claim 6, wherein (c) comprises performing a single playback of the stored data through adjustment of a playback speed of the stored data whenever the frequency changeover tuner repeats selection of a specified channel among the multiple channels.

10. The method of claim 6, wherein (c) comprises performing a single playback of the stored data through frame interpolation of the stored data whenever the frequency changeover tuner repeats selection of a specified channel among the multiple channels.

11. The method of claim 6, wherein the playback of data in (c) is performed simultaneously with the storage of the data in step (b).

12. The method of claim 6, wherein the playback of data in (c) is performed after completion of the storage of the data in step (b).

## Patentansprüche

1. Vorrichtung zum simultanen Abspielen beweglicher Kanalbilder aus mehreren Kanälen, wobei die Vorrichtung umfasst:
einen Frequenzwechseltuner (112), der dazu konfiguriert ist, aufeinander folgend mehrere Kanäle als wechselnde Frequenzen auszuwählen;
eine Demodulationseinheit (120), die dazu konfiguriert ist, Daten der ausgewählten Kanäle zu demodulieren;
eine Speichereinheit (130), die dazu konfiguriert ist, die demodulierten Daten zu speichern;
eine Abspieleinheit (140), die dazu konfiguriert ist, die gespeicherten Daten nach Kanälen abzuspielen;
eine Bildmanagementeinheit (150), die dazu konfiguriert ist, eine Anordnung von angezeigten Kanalbildern zu managen, wobei die Vorrichtung umfasst:
einen festen Kanaltuner (114), der dazu konfiguriert ist, einen Kanal zum Abspielen in Echtzeit von spezifizierten Frequenzen zu empfangen und dazu, den Kanal zum Abspielen in Echtzeit von spezifizierten Frequenzen in Echtzeit abzuspielen;
wobei die Abspieleinheit dazu konfiguriert ist, simultan bewegliche Kanalbilder aus den mehreren Kanälen abzuspielen, und der Frequenzwechseltuner zu dem festen Kanaltuner gewechselt werden kann und der feste Kanaltuner zu dem Frequenzwechseltuner gewechselt werden kann,
und wobei:
wenn der von dem festen Kanaltuner (114) ausgewählte Kanal zum Abspielen in Echtzeit zu einem der mehreren Kanäle gewechselt wird, der von dem Frequenzwechseltuner (112) ausgewählt wurde, während der Frequenzwechseltuner (112) dabei ist einen Kanal auszuwählen, bei dem es sich um einen anderen als den für ein Abspielen in Echtzeit geänderten Kanal handelt, dann wählt der feste Kanaltuner (114) den geänderten Kanal für ein Abspielen in Echtzeit aus, und der Frequenzwechseltuner (112) wählt aufeinander folgend die verbleibenden Kanäle außer dem geänderten Kanal aus, und wobei,
wenn der von dem festen Kanaltuner (114) ausgewählte Kanal zum Abspielen in Echtzeit zu dem von dem Frequenzwechseltuner ausgewählten Kanal zum Abspielen in Echtzeit geändert wird, dann wird der feste Kanaltuner (114) zum Frequenzwechseltuner (112), der aufeinander folgend die verbleibenden Kanäle außer dem geänderten Kanal für ein Abspielen in Echtzeit auswählt, und der Frequenzwechseltuner, der den geänderten Kanal auswählt, wird zum festen Kanaltuner (114).

2. Vorrichtung gemäß Anspruch 1, wobei der Frequenzwechseltuner (112) in mehrfacher Anzahl zur Verfügung gestellt ist und jeder der Frequenzwechseltuner aufeinander folgend Kanalgruppen empfängt, von denen jede aus mehreren Kanälen zusammengesetzt ist.

3. Vorrichtung gemäß Anspruch 1, wobei die Abspieleinheit (140) ein Abspielen der gespeicherten Daten jedes Mal wiederholt, wenn der Frequenzwechseltuner die Auswahl eines spezifizierten Kanals unter den mehreren Kanälen wiederholt.

4. Vorrichtung gemäß Anspruch 1, wobei die Abspieleinheit (140) ein einzelnes Abspielen der gespeicherten Daten durch Anpassen einer Abspielgeschwindigkeit der gespeicherten Daten jedes Mal durchführt, wenn der Frequenzwechseltuner die Auswahl eines spezifizierten Kanals unter den mehreren Kanälen wiederholt.

5. Vorrichtung gemäß Anspruch 1, wobei die Abspieleinheit (140) ein einzelnes Abspielen der gespeicherten Daten durch Bildinterpolation der gespeicherten Daten jedes Mal durchführt, wenn der Frequenzwechseltuner die Auswahl eines spezifizierten Kanals unter den mehreren Kanälen wiederholt.

6. Verfahren zum simultanen Abspielen beweglicher Kanalbilder aus mehreren Kanälen, wobei das Verfahren umfasst:
(a) Auswählen eines spezifizierten Kanals unter mehreren Kanälen mit Hilfe eines Frequenzwechseltuners, der aufeinander folgend die mehreren Kanäle als wechselnde Frequenzen auswählt (S210);
(b) Empfangen und Speichern von Daten des ausgewählten Kanals (S220); und
(c) Abspielen der gespeicherten Daten (S230);
wobei der Frequenzwechseltuner nach der Vollendung des Speicherns einen auf den spezifizierten Kanal folgenden Kanal auswählt, die Schritte (b) und (c) wiederholt und die mehreren Kanalbilder auf einer Bildschirmanzeige anzeigt, wobei das Verfahren weiterhin umfasst:
- Abspielen in Echtzeit von einem der auf dem Bildschirm abgespielten mehreren Kanäle mit Hilfe eines festen Tuners, der einen spezifizierten Frequenzkanal empfängt, während simultan bewegliche Kanalbilder aus den mehreren Kanälen abgespielt werden,
- Ändern des Frequenzwechseltuners zu dem festen Kanaltuner und des festen Kanaltuners zu dem Frequenzwechseltuner, wobei das Ändern umfasst:
- wenn der von dem festen Kanaltuner ausgewählte Kanal zum Abspielen in Echtzeit zu einem der mehreren Kanäle gewechselt wird, der von dem Frequenzwechseltuner ausgewählt wurde, während der Frequenzwechseltuner dabei ist einen Kanal auszuwählen, bei dem es sich um einen anderen als den für ein Abspielen in Echtzeit geänderten Kanal handelt, dann wählt der feste Kanaltuner den geänderten Kanal für ein Abspielen in Echtzeit aus, und der Frequenzwechseltuner wählt aufeinander folgend die verbleibenden Kanäle außer dem geänderten Kanal aus, und,
wenn der von dem festen Kanaltuner ausgewählte Kanal zum Abspielen in Echtzeit zu dem von dem Frequenzwechseltuner ausgewählten Kanal zum Abspielen in Echtzeit geändert wird, dann wird der feste Kanaltuner zum Frequenzwechseltuner, der aufeinander folgend die verbleibenden Kanäle außer dem geänderten Kanal für ein Abspielen in Echtzeit auswählt, und der Frequenzwechseltuner, der den geänderten Kanal auswählt, wird zum festen Kanaltuner.

7. Verfahren gemäß Anspruch 6, wobei eine Mehrzahl von Frequenzwechseltunern zur Verfügung gestellt ist und jeder der Frequenzwechseltuner aufeinander folgend Kanalgruppen empfängt, von denen jede aus mehreren Kanälen zusammengesetzt ist.

8. Verfahren gemäß Anspruch 6, wobei der Schritt (c) umfasst: Wiederholen des Abspielens der gespeicherten Daten jedes Mal, wenn der Frequenzwechseltuner die Auswahl eines spezifizierten Kanals unter den mehreren Kanälen wiederholt.

9. Verfahren gemäß Anspruch 6, wobei der Schritt (c) umfasst: Durchführen eines einzelnen Abspielens der gespeicherten Daten durch Anpassen der Abspielgeschwindigkeit der gespeicherten Daten jedes Mal, wenn der Frequenzwechseltuner die Auswahl eines spezifizierten Kanals unter den mehreren Kanälen wiederholt.

10. Verfahren gemäß Anspruch 6, wobei der Schritt (c) umfasst: Durchführen eines einzelnen Abspielens der gespeicherten Daten durch Bildinterpolation der gespeicherten Daten jedes Mal, wenn der Frequenzwechseltuner die Auswahl eines spezifizierten Kanals unter den mehreren Kanälen wiederholt.

11. Verfahren gemäß Anspruch 6, wobei das Abspielen von Daten in Schritt (c) simultan mit dem Speichern der Daten in Schritt (b) durchgeführt wird.

12. Verfahren gemäß Anspruch 6, wobei das Abspielen von Daten in Schritt (c) nach der Vollendung des Speicherns der Daten in Schritt (b) durchgeführt wird.

## Revendications

1. Appareil de lecture simultanée d'images télévisées animées issues de plusieurs chaînes, comprenant :
un syntoniseur de permutation de fréquence (112) qui est configuré pour choisir successivement de multiples chaînes constituant des fréquences changeantes ;
une unité de démodulation (120) qui est configurée pour démoduler les données des chaînes choisies ;
une unité de stockage (130) qui est configurée pour stocker les données démodulées ;
une unité de lecture (140) qui est configurée pour lire les données stockées chaîne par chaîne ;
une unité de gestion d'images (150) qui est configurée pour gérer l'agencement des images télévisées affichées, l'appareil comprenant :
un syntoniseur de chaîne fixe (114) qui est configuré pour recevoir une chaîne à fréquence spécifique lue en temps réel et pour lire en temps réel la chaîne à fréquence spécifique lue en temps réel ;
dans lequel l'unité de lecture est configurée pour lire simultanément les images télévisées animées des multiples chaînes, et le syntoniseur de permutation de fréquence peut changer pour passer au syntoniseur de chaîne fixe et le syntoniseur de chaîne fixe peut changer pour passer au syntoniseur de permutation de fréquence,
et dans lequel :
si la chaîne à lecture en temps réel choisie par le syntoniseur de chaîne fixe (114) change pour passer à l'une des multiples chaînes choisie par le syntoniseur de permutation de fréquence (112) pendant que le syntoniseur de permutation de fréquence (112) est en train de choisir une autre chaîne qui n'est pas la chaîne destinée à être lue en temps réel ayant subi le changement, le syntoniseur de chaîne fixe (114) choisit la chaîne destinée à être lue en temps réel ayant subi le changement, et le syntoniseur de permutation de fréquence (112) choisit successivement les chaînes restantes à l'exception de ladite chaîne ayant subi le changement, et dans lequel
si la chaîne à lecture en temps réel choisie par le syntoniseur de chaîne fixe (114) change pour passer à la chaîne choisie par le syntoniseur de permutation de fréquence pour une lecture en temps réel, le syntoniseur de chaîne fixe (114) devient le syntoniseur de permutation de fréquence (112) qui choisit successivement les chaînes restantes à l'exception de la chaîne destinée à être lue en temps réel ayant subi le changement, et le syntoniseur de permutation de fréquence qui choisit ladite chaîne ayant subi le changement devient le syntoniseur de chaîne fixe (114).

2. Appareil selon la revendication 1, dans lequel le syntoniseur de permutation de fréquence (112) est prévu en plusieurs exemplaires, et chacun des syntoniseurs de permutation de fréquence reçoit successivement des groupes de chaînes respectivement composés de plusieurs chaînes.

3. Appareil selon la revendication 1, dans lequel l'unité de lecture (140) réitère la lecture des données stockées chaque fois que le syntoniseur de permutation de fréquence réitère le choix d'une chaîne spécifique parmi les multiples chaînes.

4. Appareil selon la revendication 1, dans lequel l'unité de lecture (140) effectue une seule lecture des données stockées en ajustant la vitesse de lecture des données stockées chaque fois que le syntoniseur de permutation de fréquence réitère le choix d'une chaîne spécifique parmi les multiples chaînes.

5. Appareil selon la revendication 1, dans lequel l'unité de lecture (140) effectue une seule lecture des données stockées par interpolation de trames des données stockées chaque fois que le syntoniseur de permutation de fréquence réitère le choix d'une chaîne spécifique parmi les multiples chaînes.

6. Procédé de lecture simultanée d'images télévisées animées issues de plusieurs chaînes, comprenant :
(a) le choix d'une chaîne spécifique parmi de multiples chaînes au moyen d'un syntoniseur de permutation de fréquence choisissant successivement les multiples chaînes constituant des fréquences changeantes (S210) ;
(b) la réception et le stockage des données de la chaîne choisie (S220) ; et
(c) la lecture des données stockées (S230) ;
dans lequel, à la suite du stockage, le syntoniseur de permutation de fréquence choisit une chaîne faisant suite à la chaîne spécifique, réitère les étapes (b) et (c), et lit les multiples images télévisées sur un écran, le procédé comprenant en outre :
- la lecture en temps réel de l'une des multiples chaînes en train d'être lues sur l'écran au moyen d'un syntoniseur fixe recevant une chaîne à fréquence spécifique, tout en lisant simultanément les images télévisées animées des multiples chaînes,
- permuter le syntoniseur de permutation de fréquence en syntoniseur de chaîne fixe ainsi que le syntoniseur de chaîne fixe en syntoniseur de permutation de fréquence, la permutation comprenant le fait que :
- si la chaîne à lecture en temps réel choisie par le syntoniseur de chaîne fixe change pour passer à l'une des multiples chaînes choisie par le syntoniseur de permutation de fréquence pendant que le syntoniseur de permutation de fréquence est en train de choisir une autre chaîne qui n'est pas la chaîne destinée à être lue en temps réel ayant subi le changement, le syntoniseur de chaîne fixe choisit la chaîne destinée à être lue en temps réel ayant subi le changement, et le syntoniseur de permutation de fréquence choisit successivement les chaînes restantes à l'exception de ladite chaîne ayant subi le changement, et
si la chaîne à lecture en temps réel choisie par le syntoniseur de chaîne fixe change pour passer à la chaîne choisie par le syntoniseur de permutation de fréquence pour une lecture en temps réel, le syntoniseur de chaîne fixe devient le syntoniseur de permutation de fréquence qui choisit successivement les chaînes restantes à l'exception de la chaîne destinée à être lue en temps réel ayant subi le changement, et le syntoniseur de permutation de fréquence qui choisit ladite chaîne ayant subi le changement devient le syntoniseur de chaîne fixe.

7. Procédé selon la revendication 6, dans lequel il est prévu une pluralité de syntoniseurs de permutation de fréquence, et chacun des syntoniseurs de permutation de fréquence reçoit successivement des groupes de chaînes respectivement composés de plusieurs chaînes.

8. Procédé selon la revendication 6, dans lequel l'étape (c) comprend la réitération de la lecture des données stockées chaque fois que le syntoniseur de permutation de fréquence réitère le choix d'une chaîne spécifique parmi les multiples chaînes.

9. Procédé selon la revendication 6, dans lequel l'étape (c) comprend la réalisation d'une seule lecture des données stockées par ajustement de la vitesse de lecture des données stockées chaque fois que le syntoniseur de permutation de fréquence réitère le choix d'une chaîne spécifique parmi les multiples chaînes.

10. Procédé selon la revendication 6, dans lequel l'étape (c) comprend la réalisation d'une seule lecture des données stockées par interpolation de trames des données stockées chaque fois que le syntoniseur de permutation de fréquence réitère le choix d'une chaîne spécifique parmi les multiples chaînes.

11. Procédé selon la revendication 6, dans lequel la lecture des données en (c) s'effectue simultanément au stockage des données de l'étape (b).

12. Procédé selon la revendication 6, dans lequel la lecture des données en (c) s'effectue à la suite du stockage des données de l'étape (b).
